# EUROPEAN PATENT APPLICATION

(11) **EP 4 790 024 A1**
(43) Date of publication of application: **12.08.2026**
(21) Application number: 24874578.8
(22) Date of filing: 30.09.2024
(51) Int. Cl.: C01G 53/10, C22B 3/06, C22B 3/26, C22B 3/44, C22B 7/00, C22B 23/00, C22B 26/12, H01M 10/54

(54) **METHOD FOR RECOVERING METAL**

(30) Priority: 02.10.2023 JP 2023171610
(71) Applicant: JX Metals Circular Solutions Co., Ltd., Tokyo 105-8417 (JP)
(72) Inventor: MUSASHI, Yuma, Hitachi-shi, Ibaraki 317-0056 (JP); KAWAI, Hidemasa, Hitachi-shi, Ibaraki 317-0056 (JP); KASHIMURA, Hiromichi, Hitachi-shi, Ibaraki 317-0056 (JP)
(74) Representative: Arnold & Siedsma
(86) International application number: PCT/JP2024/034989
(87) International publication number: WO 2025/074976

(57) **Abstract**

A method for recovering metals from lithium ion battery waste include: an acid leaching step of leaching metals in battery powder obtained from lithium ion battery waste with an acid to obtain a metal-containing solution containing at least one metal ion of cobalt ions and nickel ions; an extraction step of extracting one of the metal ions from the metal-containing solution by solvent extraction to obtain a metal-concentrated solution; a crystallization step of crystallizing the metal ions in the metal-concentrated solution to obtain a metal salt and a crystallized solution; a liquid circulation step of returning and using at least a part of the crystallized solution to the extraction step and/or the crystallization step; and a liquid removing step of removing a part of the metal-concentrated solution without being subjected to the crystallization step, wherein the metal-concentrated solution after the extraction step comprises sodium ions.

## Description

### [Technical Field]

This specification discloses a method for recovering metals from lithium ion battery waste.

### [Background Art]

In order to recover valuable metals from lithium ion battery waste, for example, a wet process may be applied to battery powder obtained through roasting or other predetermined dry preprocessing of lithium ion battery waste (see, for example, Patent Literature 1).

In the wet process, metals such as cobalt, nickel, manganese, lithium, aluminum, and iron in the battery powder are leached with an acid to obtain a metal-containing solution containing the dissolved metals. Next, after removing aluminum ions and iron ions from the metal-containing solution by neutralization if necessary, aluminum ions, manganese ions, cobalt ions, and nickel ions are separated from the metal-containing solution by solvent extraction. A cobalt-containing solution and a nickel-containing solution, which are metal-concentrated solutions obtained by solvent extraction of cobalt ions and nickel ions, respectively, may be subjected to a crystallization process to obtain metal salts such as cobalt salts and nickel salts, respectively. Lithium ions can then be recovered as lithium hydroxide or the like from the lithium-containing solution in which lithium ions remain.

### [Citation List]

### [Patent Literature]

[PTL 1] WO 2018/181816 A1

### [Summary of Invention]

### [Technical Problem]

The crystallized solution obtained after the metal salt is extracted in the crystallization process described above may contain cobalt ions or nickel ions as metal ions. In order to suppress the loss of valuable metals such as cobalt and nickel, it is desirable to return the crystallized solution containing the above metal ions to the solvent extraction of cobalt ions or nickel ions, or add it to a crystallizing solution for re-crystallization.

On the other hand, the metal-containing solution contains sodium ions due to the fact that the lithium-ion battery waste contains sodium, and so on. For example, if the concentration of sodium ions in the liquid increases due to the circulation of lithium ions in the series of steps from neutralization to hydroxide process, the concentration of sodium ions in the metal-concentrated solution after solvent extraction and the crystallized solution described above will also increase. This may lead to an increase in the sodium content in the metal salt.

This specification provides a method for recovering metals that can effectively suppress an increase in sodium ion concentration in the liquid between solvent extraction and crystallization.

### [Solution to Problem]

The method for recovering metals described in this specification is a method for recovering metals from lithium ion battery waste, the method comprises: an acid leaching step of leaching metals in battery powder obtained from lithium ion battery waste with an acid to obtain a metal-containing solution containing at least one metal ion of cobalt ions and nickel ions; an extraction step of extracting one of the metal ions from the metal-containing solution by solvent extraction to obtain a metal-concentrated solution; a crystallization step of crystallizing the metal ions in the metal-concentrated solution to obtain a metal salt and a crystallized solution; a liquid circulation step of returning and using at least a part of the crystallized solution to the extraction step and/or the crystallization step; and a liquid removing step of removing a part of the metal-concentrated solution without being subjected to the crystallization step, wherein the metal-concentrated solution after the extraction step comprises sodium ions.

### [Advantageous Effects of Invention]

According to the above method for recovering metals, it is possible to effectively suppress an increase in sodium ion concentration in the liquid between solvent extraction and crystallization.

### [Brief Description of Drawings]

[Fig. 1] Fig. 1 is a flow chart showing a method for recovering metals according to an embodiment of this invention.
[Fig. 2] Fig. 2 is a flow chart showing an example of a preprocessing step for obtaining battery powder from lithium ion battery waste.
[Fig. 3] Fig. 3 is a flow chart showing an example of a precursor production process and a cathode active material production process that can use the metal-concentrated solution obtained by the method for recovering metals in Fig. 1.

### [Description of Embodiments]

Embodiments of the present invention will be described in detail below.

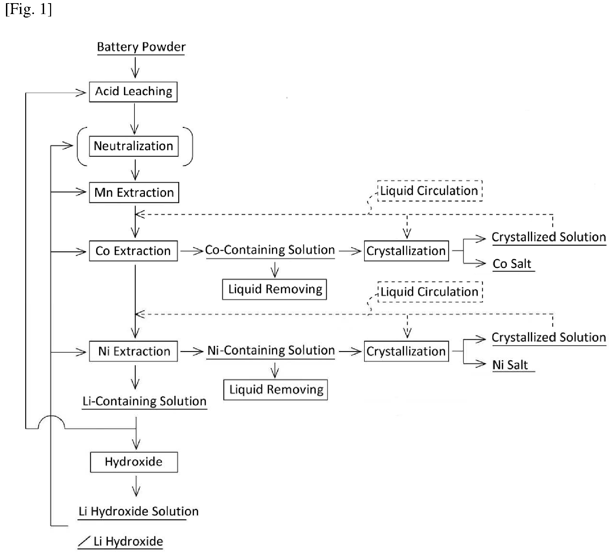

The method for recovering metals according to an embodiment is a method for recovering metals from lithium ion battery waste, and as shown in Fig. 1, includes an acid leaching step, an extraction step, a crystallization step, a liquid circulation step, and a liquid removing step.

In the acid leaching step, metals in the battery powder obtained from lithium ion battery waste are leached with an acid to obtain a metal-containing solution containing at least one metal ion of cobalt ions and nickel ions. In the extraction step (cobalt extraction step, nickel extraction step), one of the above metal ions is extracted from the metal-containing solution by solvent extraction to obtain a metal-concentrated solution (cobalt-containing solution, nickel-containing solution). In the crystallization step, the above metal ions in the metal-concentrated solution are crystallized to obtain a metal salt (cobalt salt, nickel salt) and a crystallized solution. Since the crystallized solution contains cobalt ions and nickel ions, in order to suppress the loss of these ions, a liquid circulation step is performed as shown by the dashed line in Fig. 1, and at least a part of the crystallized solution is returned to the extraction step and/or the crystallization step for use.

Here, for example, if lithium ions are circulated in a series of steps by returning a lithium hydroxide solution or a lithium hydroxide obtained by performing a hydroxide process on an extracted solution (lithium-containing solution) after the nickel extraction step to the previous step, as described below, sodium ions derived from lithium ion battery waste or the like are concentrated in the liquid of the series of steps. In this case, if the above liquid circulation step is performed, the concentration of sodium ions in the metal-concentrated solution and the crystallized solution will also gradually increase due to the circulation of liquid between the extraction step and the crystallization step. To address this, in this embodiment, the liquid removing step is performed to remove a part of the metal-concentrated solution after the extraction step without being subjected to the crystallization step. This effectively suppresses the increase in sodium ion concentration in the liquid between the extraction step and the crystallization step.

It should be noted that the extraction step, the crystallization step, and the liquid removing step can be performed for at least one of cobalt ions and nickel ions. In the example shown in the figure, the extraction step, the crystallization step, and the liquid removing step are performed for each of cobalt ions and nickel ions, respectively.

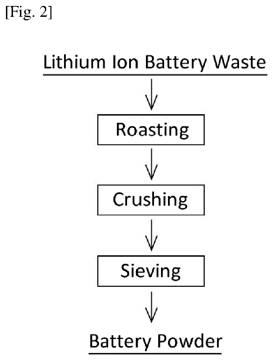

The battery powder used in the flow of Fig. 1 may be obtained, more specifically, by performing preprocessing steps such as roasting, crushing, and sieving on lithium ion battery waste, as illustrated in Fig. 2. Although the details of each step will be described herein according to Figs. 1 to 3, Figs. 1 to 3 are merely illustrative, and are not limited to such specific flows.

### (Lithium Ion Battery Waste)

The lithium ion battery waste of interest refers to lithium ion batteries which can be used in various electronic devices such as mobile phones and which have been discarded due to the end of the battery product's life, manufacturing defects, or other reasons. The recovery of valuable metals from such lithium ion battery waste is preferred in terms of effective utilization of resources. The lithium ion battery waste refers to lithium ion batteries to be recycled, regardless of whether the lithium ion batteries are traded for value, free of charge, or treated as industrial waste.

The lithium ion battery waste has a housing containing aluminum as an exterior that wraps around the lithium ion battery. Examples of the housing include those made only of aluminum and those containing aluminum, iron, aluminum laminate, and the like. The lithium ion battery waste may also contain, in the above housing, cathode active materials composed of one single metal oxide containing lithium and one selected from the group consisting of nickel, cobalt and manganese, or a composite metal oxides containing lithium and two or more of those metals, or the like, and aluminum foils (cathode substrates) to which the cathode active materials are applied and fixed by, for example, polyvinylidene fluoride (PVDF) or other organic binders. In addition, the lithium ion battery waste may also contain copper, iron, or the like. Further, the housing of the lithium ion battery waste typically contains an electrolytic solution having an electrolyte such as lithium hexafluorophosphate dissolved in an organic solvent. As the organic solvent, ethylene carbonate, diethyl carbonate or the like may be used, for example.

### (Preprocessing Step)

In many cases, the lithium ion battery waste is subjected to preprocessing step as a dry process, a part of which may include a wet process. In the preprocessing step, at least one of roasting, crushing and sieving can be performed. The lithium ion battery waste becomes battery powder through the preprocessing step. The roasting, crushing, and sieving in the preprocessing step may optionally be performed, respectively, or they may be performed in any order. The battery powder means the powder obtained by subjecting the lithium ion battery waste to any preprocessing to separate and concentrate cathode material components. The battery powder may be obtained as a powder by crushing and sieving the lithium ion battery waste with or without a heat treatment to concentrate the cathode material components.

In the roasting, the above lithium ion battery waste is heated. When the roasting is carried out, metals such as lithium and cobalt contained in the lithium ion battery waste is changed to an easily dissolvable form. During the roasting, the lithium ion battery waste is heated, and for example, preferably maintained in a temperature range of, for example, from 450°C to 1000°C, preferably in a temperature range of from 600°C to 800°C, for 0.5 to 4 hours. In the roasting, one of the heating in an air atmosphere or the heating in an inert atmosphere such as nitrogen can be carried out, as well as both the heating in the air atmosphere and the heating in the inert atmosphere may be carried out in this order or opposite order. The roasting can be of batch type or continuous type. For example, the batch type includes a stationary furnace, the continuous type includes a rotary kiln furnace, and other various types of furnaces can also be used.

During the roasting, at least a part of the electrolytic solution is removed from the lithium ion battery waste because the electrolytic solution is evaporated, or the like. In many cases, when the lithium ion battery waste is heated during the roasting, the components of the internal electrolytic solution are sequentially evaporated, starting with the component having a lower boiling point. When the roasting is carried out, the electrolytic solution is removed and rendered harmless, and the organic binder is decomposed to promote separation between the aluminum foil and the cathode active material during crushing and sieving, which will be described below. Although the composition of the cathode active material changes due to roasting, the roasted material is also referred to as the cathode active material, for convenience.

After the roasting, the crushing can be carried out to remove cathode active materials and the like from the housing of the lithium ion battery waste. The crushing selectively separates the cathode active materials from the aluminum foils to which the cathode active materials are applied, while destroying the housings of the lithium ion battery waste.

Various known apparatuses or devices can be used in the crushing. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an outlet of the crusher, whereby the lithium ion battery waste is discharged from the crusher through the screen when crushed to a size that can pass through the screen.

After crushing the lithium ion battery waste, the sieving is performed by sieving it using a sieve having appropriate openings. Thus, aluminum or copper remains on the sieve, and the battery powder that has removed aluminum or copper to some extent can be obtained under the sieve.

The battery powder obtained in the preprocessing step contains nickel, cobalt, lithium, manganese, and the like. For example, a content of cobalt in the battery powder is 1% to 30% by mass, a content of nickel is 1% to 30% by mass, a content of lithium is 2% to 8% by mass, a content of manganese is 1% to 30% by mass, although not limited thereto. The battery powder may further contain 1% to 10% by mass of aluminum, 1% to 5% by mass of iron, 1% to 10% by mass of copper, and 0.001% by mass to 0.1% by mass of sodium.

### (Acid Leaching Step)

In the acid leaching step, the metals in the battery powder are leached with an acid using an acidic leaching solution such as sulfuric acid. As a result, the metals in the battery powder are dissolved to obtain a solution that has dissolved the metals in the battery powder, and a leached residue that has remained undissolved. As used herein, the solution in which the metals in the battery powder are dissolved in each step from the end of leaching in the acid leaching step to the nickel extraction step as described below is also referred to as a metal-containing solution.

In the acid leaching step, the pH of the acidic leaching solution or leached solution may be, for example, less than 3.5. Moreover, an oxidation-reduction potential (ORP value, based on silver/silver chloride potential) may be 100 mV or less. After leaching, solid-liquid separation may be performed to separate the leached residue from the metal-containing solution, but the solid-liquid separation may not be performed and the metal-containing solution containing the leached residue may be subjected to the next neutralization step. As a diluent for adjusting the pH of the acidic leaching solution, an extracted solution (a lithium-containing solution such as a lithium sulfate solution) in a nickel extraction step as described below or water can be used. Thus, the lithium ions are circulated in a series of steps in the wet process, and the lithium ions in the solution can be concentrated in the steps.

The metal-containing solution obtained in the acid leaching step may have, for example, a cobalt ion concentration of 5 g/L to 50 g/L, a nickel ion concentration of 10 g/L to 50 g/L, a lithium ion concentration of 2 g/L to 10 g/L, a manganese ion concentration of 0 g/L to 50 g/L, an aluminum ion concentration of 1.0 g/L to 20 g/L, an iron ion concentration of 0.1 g/L to 5.0 g/L, a copper ion concentration of 0.005 g/L to 0.2 g/L, and a sodium ion concentration of 0.001 g/L to 0.1 g/L.

### (Neutralization Step)

When the metal-containing solution obtained in the acid leaching step contains aluminum ions and/or iron ions, a neutralization step can be performed after the acid leaching step. In the neutralization step, the pH of the metal-containing solution is increased to precipitate aluminum ions and/or iron ions as solids, and the precipitate is separated. When the metal-containing solution contains aluminum ions and iron ions, it is preferable that the neutralization step includes an aluminum removal stage and an iron removal stage. However, if the metal-containing solution does not contain aluminum ions and/or iron ions, the aluminum removal step and/or iron removal step may be omitted.

In the aluminum removal step, the pH of the metal-containing solution is increased to precipitate at least a part of the aluminum ions and remove them by solid-liquid separation. At this time, for example, when the pH is increased in the range of 4.0 to 5.0 with a pH adjusting agent at a solution temperature of 50°C to 90°C, the aluminum ions can be effectively separated while suppressing precipitation of nickel ions and/or cobalt ions.

In the iron removal step, an oxidizing agent is added and a pH adjusting agent is further added to increase the pH in a range of 4.0 to 5.0. As a result, the iron ions are oxidized from divalent to trivalent, and precipitated as a solid such as an oxide or iron hydroxide (Fe(OH)3), which can be removed by solid-liquid separation. An oxidation-reduction potential (ORP value, based on silver/silver chloride potential) during oxidation is preferably 300 mV to 900 mV. The oxidizing agent is not particularly limited as long as it can oxidize iron ions, but it may preferably be manganese dioxide, a cathode active material, and/or a manganese-containing leached residue obtained by leaching a cathode active material. The manganese-containing leached residue obtained by leaching the cathode active material with the acid may include manganese dioxide. When the cathode active material or the like is used as the oxidizing agent, it causes a precipitation reaction which converts manganese ions in the liquid to manganese dioxide, so that the precipitated manganese can be removed together with iron.

Examples of the pH adjusting agent used in neutralization in the above aluminum removal stage and iron removal stage include lithium hydroxide in the form of a solid or a liquid, sodium hydroxide, sodium carbonate, and ammonia. Among them, lithium hydroxide is preferable because it is possible to prevent sodium and the like from being mixed into lithium hydroxide prepared in a hydroxide step as described below. For the pH adjusting agent, a lithium hydroxide solution obtained in the hydroxide step or lithium hydroxide can be used, so that lithium ions are circulated in the series of the steps.

### (Manganese Extraction Step)

The metal-containing solution can be subjected to a solvent extraction method to extract and remove manganese ions in the manganese extraction step, after undergoing the above neutralization step if necessary. Here, when aluminum ions remain in the metal-containing solution, not only manganese ions but also aluminum ions are extracted and removed. However, the manganese extraction step may be omitted.

In the extraction of the manganese ions, an extracting agent containing a phosphate ester-based extracting agent is preferably used. Specific examples of the phosphate ester-based extracting agent include di-2-ethylhexyl phosphate (abbreviated name: D2EHPA, for example, trade name: DP8R). Further, the extracting agent may be a mixture of the phosphate ester-based extracting agent and an oxime-based extracting agent. In this case, the oxime-based extracting agent is preferably aldoxime or based on aldoxime. Specific examples include 2-hydroxy-5-nonylacetophenone oxime (trade name: LIX84), 5-dodecyl salicylaldoxime (trade name: LIX860), a mixture of LIX84 and LIX860 (trade name: LIX984), 5-nonyl salicylaldoxime (trade name: ACORGAM5640) and the like.

The extracting agent may be diluted with an aromatic, paraffinic, naphthenic, or other hydrocarbon-based organic solvent to a concentration of 10% to 30% by volume and used as a solvent.

During extraction, an equilibrium pH is preferably 2.3 to 3.5, and more preferably 2.5 to 3.0. As the pH adjusting agent used at this time, a lithium hydroxide solution is preferably used, and for example, a lithium hydroxide solution obtained in a hydroxide step described below or lithium hydroxide can be used.

The extraction may employ a mixer-settler. In this case, first, the pH is adjusted by, for example, including a pH adjusting agent in the solvent, and then the metal-containing solution (aqueous phase) and the solvent (organic phase) are mixed in a mixer to form a mixed solution, which is stirred, for example, for 5 to 60 minutes. At this time, the predetermined target metal ions such as manganese ions in the metal-containing solution migrate to the solvent. The temperature during extraction is from ordinary temperature (approximately 15 to 25°C) to 60°C or lower, and it is preferably carried out at 35 to 45°C for reasons of an extraction rate, phase separation, and evaporation of the organic solvent. The mixed solution is then left to stand in a settler, and the aqueous phase and organic phase are separated based on a difference between their specific gravities. This provides an extracted solution that has separated the solvent. Extraction in steps other than the manganese extraction step can also be carried out in substantially the same manner.

At the time of extraction, it is desirable to carry out extraction by countercurrent type multistage extraction in which directions of the flow of the aqueous phase and the solvent used for each extraction are opposite to each other. By doing so, the extraction of cobalt ions, nickel ions, and lithium ions can be suppressed, while increasing the extraction rate of manganese ions. In the case of the countercurrent type multistage extraction, it is effective to set the equilibrium pH at the first stage of extraction to a value in the above range, and decrease the equilibrium pH at the time of extraction through successive stages.

In the metal-containing solution after the manganese extraction step, for example, the cobalt ion concentration may be 0 g/L to 50 g/L, and the nickel ion concentration may be 0 g/L to 50 g/L, and the lithium ion concentration may be 1 g/L to 30 g/L, and the sodium ion concentration may be 0.001 g/L to 0.1 g/L.

### (Cobalt Extraction Step)

For example, after the manganese extraction step, when the metal-containing solution contains cobalt ions, a cobalt extraction step can be performed to extract and separate cobalt ions from the metal-containing solution by solvent extraction.

It is preferable to use a solvent containing a phosphoric acid-based extracting agent, especially a phosphonate ester-based extracting agent, for the extraction of the cobalt ions. Particularly, 2-ethylhexyl 2-ethylhexylphosphonate (trade name: PC-88A, Ionquest 801) is preferable from the viewpoint of separation efficiency between nickel ions and cobalt ions. The extracting agent may be diluted with a hydrocarbon-based organic solvent so as to have a concentration of 10% by volume to 30% by volume and used as a solvent.

When extracting the cobalt ions, the equilibrium pH during extraction is preferably 5.0 to 6.0, and more preferably 5.0 to 5.5. If the pH is less than 5.0, the cobalt ions may not be sufficiently extracted into the solvent. As the pH adjusting agent at this time, a lithium hydroxide solution is preferably used, for example, a lithium hydroxide solution obtained in a hydroxide step as described below or lithium hydroxide can be used.

In the extraction of the cobalt ions as well, it is desirable to carry out the extraction by countercurrent type multistage extraction in which directions of flow of the aqueous phase and the solvent used for each extraction are opposite to each other. By doing so, it is possible to increase an extraction rate of cobalt ions while suppressing the extraction of nickel ions and lithium ions.

During the above extraction, not only cobalt ions but also nickel ions and lithium ions may be somewhat extracted into the solvent. In this case, if necessary, the solvent which extracted the cobalt ions may be subjected to one or more scrubbing processes using a scrubbing solution to remove nickel ions and lithium ions that may be contained in the solvent. The scrubbing solution can be, for example, a sulfuric acid solution having a pH of 3.5 to 5.5. The scrubbed solution may contain nickel ions and lithium ions. Therefore, part or all of the scrubbed solution is mixed with the metal-containing solution after the manganese extraction step and it is used as an extracting solution to carry out the cobalt extraction step. As a result, the nickel ions and/or lithium ions can be circulated or retained in the series of steps to concentrate them, without losing them. However, if the solvent used to extract the cobalt ions does not contain nickel ions or lithium ions, the scrubbing may not be performed.

The solvent containing the cobalt ions is then subjected to stripping. The stripping solution used for stripping may be any inorganic acid such as sulfuric acid, hydrochloric acid, and nitric acid, but can be appropriately determined according to the mixing step or crystallization step performed next. In many cases, sulfuric acid can be used as the stripping solution. Here, the stripping is carried out under pH conditions such that all the cobalt ions transfer from the solvent to the stripping solution as much as possible. Specifically, the pH is preferably in the range of 2.0 to 4.0, and more preferably in the range of 2.5 to 3.5.

### (Nickel Extraction Step)

When the metal-containing solution after extracting cobalt ions in the cobalt extraction step contains nickel ions, a nickel extraction step can be performed to extract nickel ions from the metal-containing solution by solvent extraction.

The solvent used in the nickel extraction step preferably contains a carboxylic acid-based extracting agent. Examples of the carboxylic acid-based extracting agent include neodecanoic acid and naphthenic acid. Among them, the neodecanoic acid (Versatic Acid 10 (VA-10) manufactured by Shell Chemicals) is preferred because of its ability to extract nickel ions. The extracting agent may be diluted with an aromatic, paraffinic, naphthenic, or other hydrocarbon-based organic solvent to a concentration of 10% to 30% by volume and used as a solvent.

The equilibrium pH during the extraction is preferably 6.0 to 8.0, and more preferably 6.8 to 7.2. The pH adjusting agent used to adjust the pH at this time is preferably a lithium hydroxide solution, for example, a lithium hydroxide solution obtained in a hydroxide step as described below or lithium hydroxide can be used.

The extraction is preferably carried out in multiple stages using a countercurrent method in which the metal-containing solution and the solvent flow in opposite directions. By doing so, the extraction of lithium ions into the solvent can be suppressed, and the extraction rate of nickel ions can be increased. When performing multi-stage countercurrent extraction, it is effective, for example, to set the equilibrium pH during the first stage of extraction to a value within the above range, and then lower the equilibrium pH through successive stages of extraction.

The solvent that has contained the nickel ions by the extraction may optionally be subjected to one or more scrubbing processes using a scrubbing solution to remove lithium ions that may be contained in the solvent. The scrubbing solution can be, for example, a sulfuric acid solution having a pH of 5.0 to 6.0. Here, the resulting scrubbed solution may contain lithium ions. Therefore, it is preferable that a part or all of the scrubbed solution is mixed with the metal-containing solution after the cobalt extraction step, and it is used as the extracting solution to carry out the nickel extraction step. As a result, the lithium ions can be circulated or retained and concentrated in the series of steps without losing them. However, if the solvent containing the nickel ions does not contain lithium ions, the scrubbing may not be performed.

The solvent containing the nickel ions is then subjected to stripping using a stripping solution. The stripping solution used for stripping may be any inorganic acid such as sulfuric acid, hydrochloric acid, and nitric acid, but can be appropriately determined according to the mixing step or crystallization step performed next. In many cases, sulfuric acid can be used as the stripping solution. In the stripping, the pH is preferably in the range of 1.0 to 3.0, and more preferably 1.5 to 2.5. Although the O/A ratio and the number of times can be determined as needed, the O/A ratio is 5 to 1, and more preferably 4 to 2.

The extracted solution (a lithium sulfate solution or the like) in which the nickel ions have transferred to the solvent mainly contains lithium ions and may be added to the acidic leaching solution in the acid leaching step. This allows the lithium ions contained in the extracted solution to be circulated in a series of steps.

### (Crystallization Step)

A crystallization step can be performed on the cobalt-containing solution and the nickel-containing solution (metal-concentrated solution) obtained in the cobalt extraction step and the nickel extraction step (extraction step).

In the cobalt crystallization step, the cobalt-containing solution (stripped solution) obtained by stripping in the cobalt extraction step described above is heated to, for example, 40°C to 120°C and concentrated. As a result, the cobalt ions are crystallized to obtain a cobalt salt such as cobalt sulfate. The cobalt salt thus obtained may have a nickel content of 5 mass ppm or less.

Also, in the nickel crystallization step, when a stripped solution such as a nickel sulfate solution is obtained by stripping, the nickel-containing solution as the stripped solution obtained by stripping in the nickel extraction step described above or, if necessary, the nickel-containing solution obtained by electrolyzing and dissolving the stripped solution is heated to 40°C to 120°C and concentrated. As a result, the nickel ions are crystallized to obtain a nickel salt such as nickel sulfate.

### (Liquid Circulation Step)

Here, the crystallized solution in the cobalt crystallization step may contain uncrystallized cobalt ions and lithium ions. It is desirable to mix such a crystallized solution with the cobalt-containing solution before the crystallization step and subject it to the crystallization step again, use it to adjust the cobalt ion concentration of the scrubbing solution used for the solvent that has extracted the cobalt ions in the cobalt extraction step, or mix it with the metal-containing solution after the manganese extraction step and subject it to the cobalt extraction step. By doing so, cobalt ions and lithium ions can be circulated or retained and concentrated in the series of steps without losing them.

Also, the crystallized solution in the nickel crystallization step may contain uncrystallized nickel ions and lithium ions. It is desirable to mix such a crystallized solution with the nickel-containing solution before the crystallization step and subject it to the crystallization step again, use it to adjust the nickel ion concentration of the scrubbing solution for the solvent containing nickel ions, or mix it with the metal-containing solution after the cobalt extraction step and subject it to the nickel extraction step. By doing so, nickel ions and lithium ions can be circulated or retained and concentrated in the series of steps without losing them.

At least a part of the crystallized solution may be returned to the extraction step and/or the crystallization step, and all of the crystallized solution is not necessarily returned.

### (Liquid Removing Step)

As mentioned above, if the crystallized solution is circulated back to the previous step, the sodium ion concentration in the liquid may gradually increase. In this case, the cobalt salt and the nickel salt obtained in the crystallization step are contaminated with sodium, which degrades the quality.

In contrast, in this embodiment, the liquid removing step is performed and the metal-concentrated solution (cobalt-containing solution or nickel-containing solution) after the extraction step is removed without being subjected to the crystallization step. The remaining metal-concentrated solution that remains after removing a part of the metal-concentrated solution in the liquid removing step is subjected to the crystallization step. By performing the liquid removing step, a part of the sodium in the metal-concentrated solution is removed, so that an increase in the sodium ion concentration can be suppressed.

The liquid removing step may be performed periodically or irregularly when the sodium ion concentration of the metal-concentrated solution increases to a certain degree while continuously operating the extraction step and the crystallization step. However, it can also be incorporated into these steps to perform it constantly. In any case, it is preferable to perform the liquid removing step so that the sodium ion concentration of the metal-concentrated solution is maintained at 100 mg/L or less.

The metal-concentrated solution removed in the liquid removing step contains sodium ions and is preferably used in the predetermined precursor production process described below. If the objective is to remove sodium, it is also possible to remove a part of the crystallized solution. However, it is preferable to remove the metal-concentrated solution by the above liquid removing step because it eliminates the need to subject at least a part of the metal-concentrated solution to the crystallization step. In addition, by performing the liquid removing before the crystallization step, the increase in sodium content in the metal salt can be suppressed as compared to liquid removing after the crystallization step.

In order to actually perform the liquid removing step, a part of the metal-concentrated solution can be removed from containers such as storage tanks used in the steps as described above, or from piping or flow paths used for liquid transfer between certain steps. More specifically, for example, a branch path may be provided in the piping connecting the steps to adjust the flow rate of the metal-concentrated solution sent to the branch path side and removed, by means of a valve or a pipe diameter. However, the metal-concentrated solution can be removed by various specific methods without being limited to the above, and such methods can be selected as appropriate.

### (Hydroxide Step)

A hydroxide step can be performed on the lithium-containing solution (extracted solution) such as lithium sulfate solution after the nickel ions have been transferred to the solvent. The details of the hydroxide step are not particularly limited as long as the lithium hydroxide solution can be prepared, but, for example, it includes a carbonation and chemical conversion method that uses calcium hydroxide after preparing lithium carbonate, a chemical conversion method that uses barium hydroxide, an electrodialysis method, and the like.

When barium hydroxide is used, barium hydroxide can be added to the lithium-containing solution to obtain the lithium hydroxide solution based on the reaction: Li₂SO₄ + Ba(OH)₂ → 2LiOH + BaSO₄. At this time, barium that can be dissolved in the solution can be separated and removed using a cation exchange resin, a chelate resin, or the like.

For the electrodialysis, in a bipolar membrane electrodialysis device, the lithium-containing solution is introduced into a desalting chamber between an anion exchange membrane and a cation exchange membrane, and pure water is introduced into each of an acid chamber between a bipolar membrane and an anion exchange membrane and an alkaline chamber between a cation exchange membrane and a bipolar membrane, and a voltage is applied between the electrodes. Then, the lithium ions in the metal-containing solution in the desalting chamber move to the alkaline chamber, and in the alkaline chamber, pure water is decomposed into hydroxide ions by the bipolar membrane to obtain a lithium hydroxide solution. It should be noted that anions of inorganic acids such as sulfate ions in the metal-containing solution in the desalting chamber pass through the anion exchange membrane and move to the acid chamber. In electrodialysis, a desalted solution containing substantially no lithium salt is obtained as a result of the separation of most of the lithium salt from the metal-containing solution in the desalting chamber.

At least a part of the lithium hydroxide solution obtained as described above is effectively used as an alkaline pH adjusting agent used in a series of steps, more specifically, at least one step selected from the group consisting of the neutralization step, the manganese extraction step, the cobalt extraction step, and the nickel extraction step.

Also, lithium hydroxide may be recovered from the above lithium hydroxide solution by separation by crystallization. For example, when the lithium hydroxide solution is returned to a series of steps as a pH adjusting agent as described above, the lithium in the newly added battery powder may gradually increase the lithium ion concentration in the liquid. Depending on the lithium concentration, the separation by crystallization can be performed to recover lithium ions as lithium hydroxide.

In the separation by crystallization, a crystallizing operation such as heat concentration or vacuum distillation can be performed in order to deposit lithium hydroxide. For the heat concentration, a higher temperature during crystallizing leads to faster progression of the process, which is preferable. However, the temperature of the crystallized product after separation by crystallization can be a temperature of less than 60°C at which water of crystallization is not released. This is because anhydrous lithium hydroxide that has released the water of crystallization is deliquescent and thus difficult to be handled. Subsequently, a pulverization process or the like can be performed in order to adjust the lithium hydroxide to required physical properties.

### (Production Processes for Precursor and Cathode Active Material)

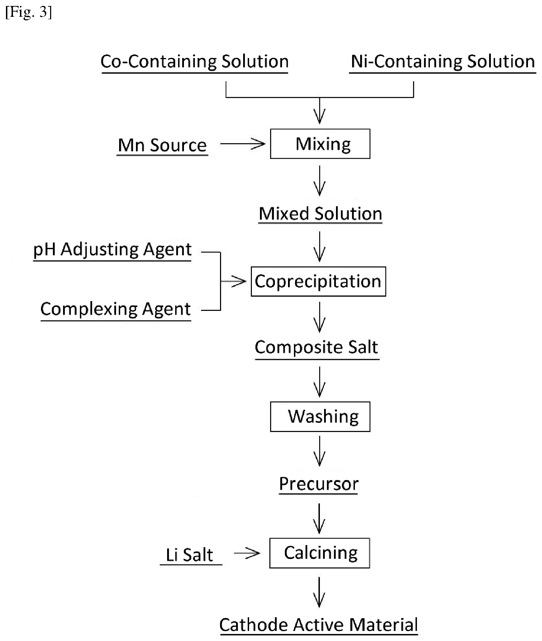

To produce the precursor of the lithium ion battery cathode active material (also simply referred to as "cathode active material"), for example, as shown in Fig. 3, a mixing step, a coprecipitation step, and a washing step can be performed in this order. Furthermore, to produce the cathode active material, a calcining step can be performed on the precursor.

In the mixing step, the above metal-concentrated solution (cobalt-containing solution and/or nickel-containing solution) is used to prepare a mixed solution such as a sulfuric acid solution containing cobalt ions, nickel ions, and manganese ions. Specifically, it can be adjusted by mixing cobalt ions, nickel ions, and manganese ions in a solution containing a cobalt-containing solution and/or a nickel-containing solution, while adding a manganese source, cobalt source, nickel source and the like as needed. The amounts of the cobalt-containing solution and/or the nickel-containing solution, and the manganese source to be added can be determined according to the desired composition of the precursor and the cathode active material to be produced.

As mentioned earlier, the cobalt-containing solution and/or nickel-containing solution contains sodium ions. The sodium ions are brought into the mixed solution during the mixing step, so the mixed solution contains sodium ions.

In the coprecipitation step, a pH adjusting agent is added to the above mixed solution to adjust the pH, and a complexing agent is added. This causes a coprecipitation reaction, which precipitates the cobalt ions, nickel ions and manganese ions in the mixed solution to obtain a composite salt containing cobalt, nickel and manganese. Typically, the composite salt may be a composite hydroxide containing cobalt, nickel and manganese. The coprecipitation reaction can be performed under conditions often employed in the production of precursors of cathode active materials.

Here, sodium hydroxide is used as the pH adjusting agent. Thereby, the impurities introduced due to the use of the pH adjusting agent will be the same sodium as the impurities brought in from the cobalt-containing solution and/or nickel-containing solution and included in the mixed solution, as described above. Such sodium is mixed into the composite salt produced in the coprecipitation reaction, but it can be effectively removed in the washing step described below. If a pH adjusting agent other than sodium hydroxide is used, the addition of such pH adjusting agent will introduce other impurities than sodium into the composite salt, and even if sodium is removed, such other impurities can remain in the precursor.

The composite salt obtained in the coprecipitation step is subjected to washing in the washing step to form a precursor. This washing is primarily intended to remove impurities such as sodium from the composite salt. The composite salt produced in the coprecipitation step tend to have sodium primarily attached to the surfaces of their particles. Hence, washing the composite salt in the washing step will wash away the sodium attached to the surfaces of its particles, resulting in a precursor with a sufficiently low sodium content.

In the washing, for example, the composite salt can be put into a washing solution such as pure water to form a slurry, and after performing operations such as stirring as necessary, the composite salt can be extracted by solid-liquid separation. Such washing may be repeated multiple times, not just once.

The washed solution obtained after washing may contain small amounts of cobalt ions and nickel ions as well as sodium ions. When this washed solution is returned to the steps of the metal recovery method described above, small amounts of cobalt and nickel are expected to be recovered, but a considerable amount of sodium is brought in. Therefore, it is preferable not to return the washed solution to the metal recovery method, for example by discarding it.

To produce the cathode active material, a calcining step is performed on the above precursor. In the calcining step, the precursor obtained in the coprecipitation step described above is mixed with a lithium source by kneading or the like, and the mixture is heated and calcined. Here, lithium hydroxide obtained in the hydroxide step described earlier may be used as the lithium salt. After the calcining step, crushing or other processing is performed as necessary to produce cathode active materials such as a ternary system of Li[NiₐCo_{b}Mn_{(1-a-b)}]O₂ (NCM) or Li[NiₐCo_{b}Al_{(1-a-b)}]O₂ (NCA), or a quaternary system of Li[NiₐCo_{b}Mn_{c}Al_{(1-a-b-c)}]O₂ (NCMA).

## Claims

1. A method for recovering metals from lithium ion battery waste, the method comprising:
an acid leaching step of leaching metals in battery powder obtained from lithium ion battery waste with an acid to obtain a metal-containing solution containing at least one metal ion of cobalt ions and nickel ions;
an extraction step of extracting one of the metal ions from the metal-containing solution by solvent extraction to obtain a metal-concentrated solution;
a crystallization step of crystallizing the metal ions in the metal-concentrated solution to obtain a metal salt and a crystallized solution;
a liquid circulation step of returning and using at least a part of the crystallized solution to the extraction step and/or the crystallization step; and
a liquid removing step of removing a part of the metal-concentrated solution without being subjected to the crystallization step, wherein the metal-concentrated solution after the extraction step comprises sodium ions.

2. The method for recovering metals from lithium ion battery waste according to claim 1, wherein the metal-concentrated solution removed in the liquid removing step is used in a precursor production process for lithium ion battery cathode active materials, and
wherein the precursor production process comprises using sodium hydroxide as a pH adjusting agent to produce a composite salt containing cobalt, nickel and manganese by coprecipitation reaction.

3. The method for recovering metals according to claim 1 or 2, wherein the method comprises a hydroxide step of preparing a lithium hydroxide solution and/or lithium hydroxide by crystallization using a lithium hydroxide solution from a lithium-containing solution obtained after the extraction step.

4. The method for recovering metals according to claim 3, wherein the lithium hydroxide solution and/or lithium hydroxide are used as a pH adjusting agent in the extraction step.

5. The method for recovering metals according to claim 3, wherein the metal-containing solution comprises aluminum ions and/or iron ions, and between the acid leaching step and the extraction step, a neutralization step is included to increase a pH of the metal-containing solution and precipitate aluminum ions and/or iron ions, and
wherein the lithium hydroxide solution and/or the lithium hydroxide are used as a pH adjusting agent in the neutralization step.

6. The method for recovering metals according to claim 3, wherein the lithium hydroxide is prepared in the hydroxide step, and
wherein the lithium hydroxide is used in a cathode active material production process.

7. The method for recovering metals according to claim 1 or 2, wherein the lithium-containing solution obtained after the extraction step is used in the acid leaching step.
